# EUROPEAN PATENT SPECIFICATION

(11) **EP 2 946 175 B1**
(45) Date of publication and mention of the grant of the patent: **11.10.2017**
(21) Application number: 14700202.6
(22) Date of filing: 13.01.2014
(51) Int. Cl.: G01D 5/34, G06K 7/10

(54) **A METHOD OF READING DATA REPRESENTED BY A PERIODIC, POLARISING NANOSTRUCTURE**
VERFAHREN ZUM LESEN VON DATEN, DIE DURCH EINE PERIODISCHE, POLARISIERENDE NANOSTRUKTUR VERKÖRPERT WERDEN
PROCÉDÉ DE LECTURE DE DONNÉES REPRÉSENTÉES PAR UNE NANOSTRUCTURE PÉRIODIQUE ET POLARISANTE

(30) Priority: 15.01.2013 EP 13250008
(43) Date of publication of application: 25.11.2015
(73) Proprietor: Renishaw Plc., Wotton-Under-Edge, Gloucestershire GL12 8JR (GB)
(72) Inventor: KIDD, Matthew, Donald, Wotton-under-Edge, Gloucestershire GL12 8JR (GB); WESTON, Nicholas, John, Wotton-under-Edge, Gloucestershire GL12 8JR (GB); HENSHAW, James, Reynolds, Wotton-under-Edge, Gloucestershire GL12 8JR (GB); ARDRON, Marcus, Wotton-under-Edge, Gloucestershire GL12 8JR (GB); DARDIS, John, Wotton-under-Edge, Gloucestershire GL12 8JR (GB); THOMSON, Robert, Edinburgh, Lothian EH14 4AS (GB)
(74) Representative: Brewer, Michael Robert
(86) International application number: PCT/GB2014/050080
(87) International publication number: WO 2014/111696

(56) References cited:
- EP-A1- 0 421 024
- US-A1- 2007 206 480

## Description

### Field of the invention

The present invention relates to methods and apparatus for reading data represented by markings, for example the reading of data for identification, anti-counterfeiting or authentication purposes.

### Background to the Invention

It is known to use surface markings to represent data that can be used for authentication or anti-counterfeiting purposes. Such authentication or anti-counterfeiting measures can be particular important for high value goods, goods that can be copied easily, or goods where quality, content or provenance is particularly important, for example, microchips, semiconductor devices, circuit boards, drug packaging, memory devices, or recorded music, image, video or text content.

It can be advantageous for surface markings for authentication or anti-counterfeiting purposes to be difficult to reproduce, for example without specialist knowledge or equipment. It can also be important that such markings are robust, given the range of different conditions that a product to which the markings are applied may be subject to in practice.

It is known that ultrafast laser pulse interaction with a surface can result in the formation of a periodic surface structure, which is generally termed a Laser Induced Periodic Surface Structure (LIPSS). The effect of 'a regular system of parallel straight lines' appearing on the surface of various semiconductors damaged by light from a ruby laser was disclosed in "Semiconductor surface damage produced by ruby lasers", Birnbaum, Milton, Journal of Applied Physics, 1965, Vols. 36, 3688. Since then, these structures have been produced using anything from continuous wave to picosecond lasers, but most commonly femtosecond lasers.

It has been suggested in WO 2009/090324 to use periodic nanostructures in the form of LIPSS structures to represent data, for example for identification, traceability or authentication of objects or documents. In WO 2009/090324, data is represented by the orientation of the LIPSS structures, the orientation being controlled by controlling the polarisation of the laser radiation used to form the structure. The data is read by applying light to the structure and determining the colour of the resulting light received from the structure, with the colour of the light received from the LIPSS structure being dependent on the orientation of the LIPSS structure due to diffraction effects. An image capture device, such as a camera, can be used to capture an image of the surface marked with the LIPSS structures, and the data can be processed to determine the colours that are present and the data values represented by the colours.

The control of the colour of a surface by marking the surface with LIPSS structures has also been described in Ahsan et al, Applied Surface Science, 257 (2011), 7771-7777, 2011; in Dusser et al, Laser Applications in Microelectronics and Optoelectronic Manufacturing VII, Proc. of SPIE, Vol. 7201, 2009; and in Dusser et al, Optics Express 2913, Vol. 18, No. 3, 1 February 2010.

US 2007/0206480 describes a polarisation detection system for optical readout of disc-shaped optical data/information storage and retrieval media with surfaces comprised of pits or marks configured as multilevel oriented nano-structures with varying pit or mark orientations and widths.

For many marking applications, robustness of the markings and avoidance of degradation during use can be important, to ensure accurate reading of the markings in practice. The detection of surface colours is sensitive to degradation of the surface, and the build-up of scratches, dirt or other deposits on the surface can cause the measured colours to vary.

### Summary of the invention

In a first aspect of the invention there is provided a method of reading data represented by a marking comprising at least one periodic nanostructure, such as a Laser Induced Periodic Surface Structure (LIPSS), the or each nanostructure comprising a plurality of substantially parallel lines, the marking representing data using a polarisation property of the periodic nanostructure, and the method comprising detecting polarised electromagnetic radiation reflected from or transmitted by the nanostructure, and determining the data represented by the marking from the detected polarised electromagnetic radiation. The detecting is performed using a polarisation-sensitive detector apparatus and/or the method further comprises applying polarised electromagnetic radiation to the nanostructure.

Reading data by determining the polarisation of electromagnetic radiation reflected from periodic nanostructures can provide a particularly robust way of reading data encoded by such periodic nanostructures. The presence of dirt on the surface, damage or other degradation of the surface, which may occur in practical circumstances may alter the strength or other properties of the reflected signal but a detector may still be able to distinguish between orthogonal polarisation states in a robust manner.

The polarisation property may comprise a preferential direction of polarisation. The polarisation property may comprise an orientation of the periodic nanostructure.

The or each nanostructure may comprise a Laser Induced Periodic Surface Structure (LIPSS).

The plurality of substantially parallel lines may be regularly spaced at an interval of less than 1µm, optionally 10 nm to 1µm in the direction perpendicular to the line extent. Optionally, the interval may be in the range 200nm to 800nm, further optionally in the range 400nm to 650nm. The period of the nanostructure may be less than the wavelength of light used to read it in applications other than direct visualisation or diffraction techniques.

The applied electromagnetic radiation may have a maximum intensity at a wavelength that is greater than the period of the periodic nanostructure.

The detecting of polarised electromagnetic radiation reflected from or transmitted by the nanostructure may comprise detecting a first signal representative of electromagnetic radiation of a first polarisation, detecting a second signal representative of electromagnetic radiation of a second, different polarisation and determining a difference between the first and second signals.

The polarisation-sensitive detector apparatus may comprise at least one pair of polarisation-sensitive detectors, and first detector of the pair has maximum sensitivity to a different polarisation than the second detector of the pair, each detector being configured to provide a respective output signal representative of detected electromagnetic radiation.

The method may comprise, for the or each pair of detectors, determining a difference between the output signals obtained using the first detector and the second detector.

The first detector may have maximum sensitivity to a first polarisation and the second detector may have maximum sensitivity to a second, substantially orthogonal polarisation.

The polarisation sensitive detector apparatus may be configured so that, in operation, the first detector and the second detector detects electromagnetic radiation from the same nanostructure, either sequentially or substantially simultaneously.

The applied electromagnetic radiation may comprise polarised electromagnetic radiation, and the applying of the electromagnetic radiation to the nanostructure comprises applying in sequence electromagnetic radiation of different polarisations to the nanostructure.

The applied electromagnetic radiation may comprise polarised electromagnetic radiation and the method may comprise detecting electromagnetic radiation reflected or transmitted from the nanostructure using a substantially non-polarisation sensitive detector apparatus.

The marking may comprise a plurality of nanostructures. Each nanostructure representing a respective data value using a polarisation property of the nanostructure, and the method may comprise determining the data values from the detected polarised electromagnetic radiation.

The marking may be at least one of a marking on a high value article and a marking on an item requiring robust traceability. The marking may be a marking on at least one of a microchip, semiconductor device, circuit board, drug packaging, memory device, or recorded music, image, video or text content carrier, medical implants or other medical devices, aircraft parts, artworks, jewellery or other craftworks.

The data may be representative of at least one of:- a code; a serial number; a manufacturer; a date, time or location of manufacture, recordal or modification; an authentication mark.

The at least one marking may comprise at least one marking on a measurement scale device and the method may comprise determining a location from the data determined from the detected polarised electromagnetic radiation.

The at least one scale marking may comprise a scale marking forming part of a series of scale markings. The other scale markings of the series may or may not comprise at least one nanostructure.

The at least one marking may comprise a plurality of scale markings forming a first series of scale markings, the measurement scale may further comprise a second series of scale markings, and the method may comprise determining a location on the measurement scale from both the first series of scale markings and the second series of scale markings.

The first series of scale markings and the second series of scale markings may be overlaid and/or share a common axis of measurement.

The first series of scale markings may comprise one of absolute scale markings and incremental scale markings, and the second series of scale markings may comprise another of absolute scale markings and incremental scale markings, and the method may comprise reading the first series of scale markings and the second series of scale markings.

In a further, independent aspect of the invention there is provided an apparatus for reading data represented by a marking comprising at least one periodic nanostructure, such as a Laser Induced Periodic Surface Structure (LIPSS), the or each nanostructure comprising a plurality of substantially parallel lines, the marking representing data using a polarisation property of the periodic nanostructure, and the apparatus comprising a detector apparatus for detecting polarised electromagnetic radiation reflected from or transmitted by the nanostructure, and a processing resource configured to determine the data represented by the marking from the detected polarised electromagnetic radiation. The apparatus further comprises a source of electromagnetic radiation configured to apply polarised electromagnetic radiation to the nanostructure, and/or the detector apparatus comprises a polarisation-sensitive detector apparatus.

In a further, independent aspect of the invention there is provided an object having a marking comprising at least one periodic nanostructure, such as a Laser Induced Periodic Surface Structure (LIPSS), the or each nanostructure comprising a plurality of substantially parallel lines, the marking representing data using a polarisation property of the periodic nanostructure and being readable by a detector apparatus for detecting polarised electromagnetic radiation reflected from or transmitted by the nanostructure.

The object may be at least one of a high value article and an item requiring robust traceability, such as a microchip, a semiconductor device, a circuit board, drug packaging, a memory device, a content carrier (e.g. for recorded music, image, video or text), a medical implant or other medical device, an aircraft part, an artwork, an item of jewellery or other craftwork.

As mentioned above, the data may be representative of at least one of:- a code; a serial number; a manufacturer; a date, time or location of manufacture, recordal or modification; and an authentication mark.

The object may be a measurement scale device, with the marking being a scale marking on the measurement scale device.

The scale marking may form part of a series of scale markings. The other scale markings of the series may or may not comprise at least one nanostructure.

The measurement scale device may further comprise a second series of scale markings, and the method may comprise determining a location on the measurement scale from both the first series of scale markings and the second series of scale markings.

The first series of scale markings and the second series of scale markings may be overlaid and/or share a common axis of measurement.

The first series of scale markings may comprise one of absolute scale markings and incremental scale markings, and the second series of scale markings may comprise another of absolute scale markings and incremental scale markings, and the method may comprise reading the first series of scale markings and the second series of scale markings.

There is also provided a method and apparatus substantially as herein described with reference to the accompanying drawings.

Any feature in one aspect of the invention may be applied to other aspects of the invention, in any appropriate combination. For example, apparatus features may be applied as method features and vice versa.

### Detailed description of embodiments

Embodiments of the invention are now described, by way of non-limiting example, and are illustrated in the following figures, in which:-
Figure 1 is a schematic diagram of an apparatus for reading a marking comprising one or more nanostructures, according to an embodiment;
Figures 2 and 3 are further schematic diagrams of the apparatus of Figure 1;
Figure 4 is an illustration of a marking that can be read using the apparatus of Figure 1;
Figure 5 is a flowchart illustrating in overview a reading of a marking comprising one or more nanostructures;
Figure 6 is a schematic diagram of an apparatus for reading a marking comprising one or more nanostructures, according to an alternative embodiment;
Figure 7 is an illustration of a system for forming a measurement scale;
Figure 8 is an illustration of a further marking that can be read using the apparatus of Figure 1 or Figure 6;
Figure 9 is an illustration of a marking comprising a periodic nanostructure in which the orientation of the lines of the nanostructure varies with position;
Figure 10 is an illustration of a measurement scale including markings comprising periodic nanostructures;
Figure 11 is an illustration of an enlarged portion of the scale of Figure 1;
Figure 12 is an illustration of a scale comprising a series of scale markings and a pair of reference marks;
Figure 13 is an illustration of a further series of scale markings and a pair of reference marks;
Figure 14 is a schematic diagram of an apparatus for reading a marking comprising one or more nanostructures, according to a further embodiment; and
Figure 15 is a schematic diagram of a marking comprising an array of nanostructures.

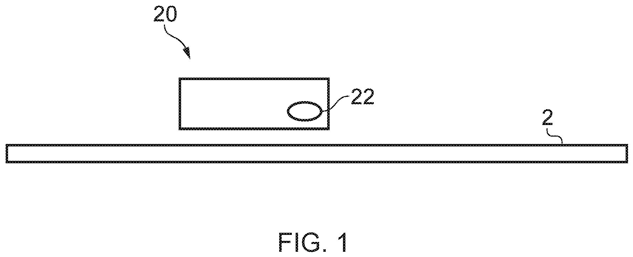

A schematic diagram of an apparatus for a marking comprising a plurality of nanostructures is shown in Figure 1. Figure 1 shows a portion of an object 2, in this case a portion of an integrated circuit board, that includes the marking on its surface. The apparatus comprises a readhead 20 comprising a light source 22.

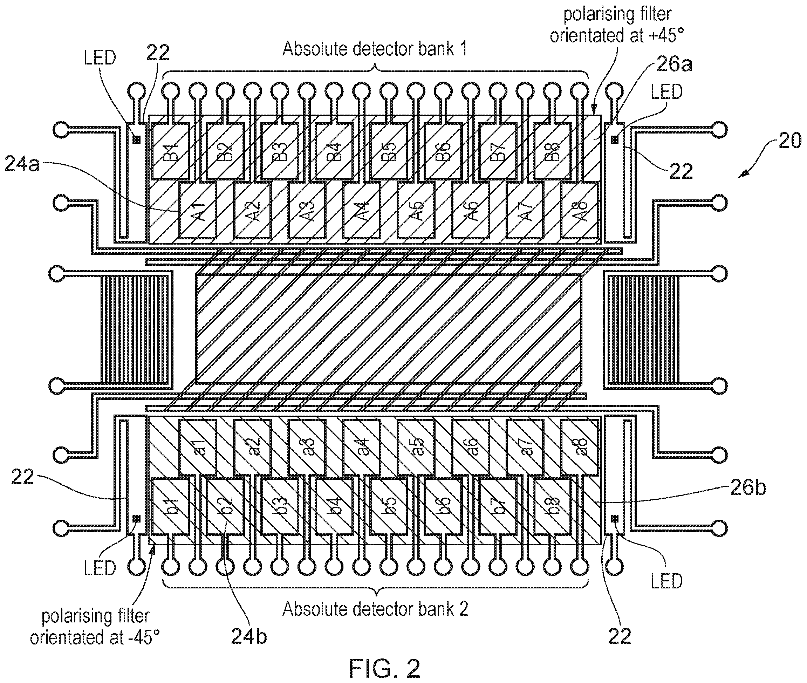

Figure 2 is a schematic diagram showing the readhead 20 in more detail. The readhead comprises the light source 22, in the form of four LEDs, and two parallel arrays of polarised detectors 24a, 24b. The detectors are arranged in differential pairs for detecting orthogonal polarisations. In Figure 2, the first parallel array of polarised detectors 24a comprises sixteen detectors labelled A1, A2, A3, A4, A5, A6, A7, A8, B1, B2, B3, B4, B5, B6, B7, B8. The second parallel array of polarised detectors 24b comprises a further sixteen detectors labelled a1, a2, a3, a4, a5, a6, a7, a8, b1, b2, b3, b4, b5, b6, b7, b8.

Optical detectors that are polarisation sensitive can be arranged in differential pairs, each one of the pair being sensitive to the orthogonal polarisation of light to its partner. By this method it is possible to robustly measure weak differences in polarisation measurement by removal of common mode signals. Pairs may be arranged in arrays for detection of fields or streams of polarisation.

In the embodiment of Figure 2, each detector of detector array 24a is paired with a respective detector of detector array 24b to form a detector pair. In the embodiment of Figure 2, detectors A1 and a1, A2 and a2, B1 and b1, B1 and b2 etc form detector pairs.

Each detector of each pair of detectors (for example detectors A and a) is made sensitive to polarised light by polarised film 26a, 26b that is placed over the detector. A first detector of the pair (for example, A1) is made sensitive to a first polarisation direction (in this case +45 degrees relative to the measurement axis) and the second detector of the pair (in this case a1) is made sensitive to a second, orthogonal polarisation direction (in this case -45 degrees relative to the measurement axis).

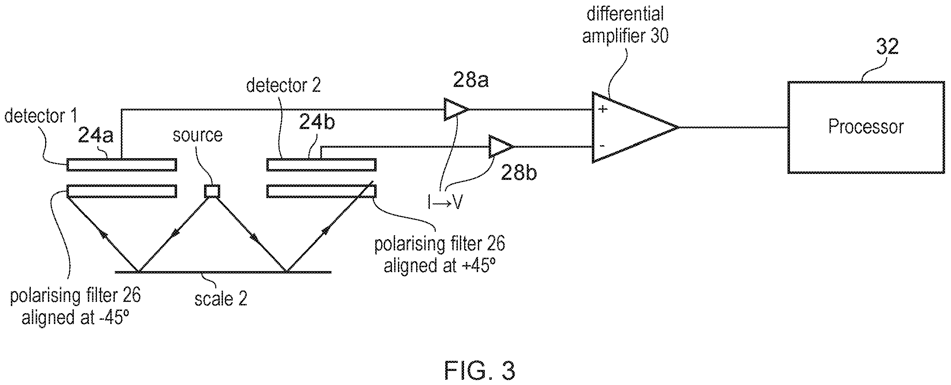

Figure 3 is a further, simplified schematic diagram showing, in side-view, the readhead in a reading position adjacent to the object 2. The readhead includes a pair of I-V converters 28a, 28b for each detector pair. Each I-V converter 28a, 28b is connected to an output of a respective one of the detectors of the detector pair. The output of each I-V converter 28a, 28b is connected to a differential amplifier 30, which in turn is connected to a processor 32, which provides a processing resource for processing detected signals.

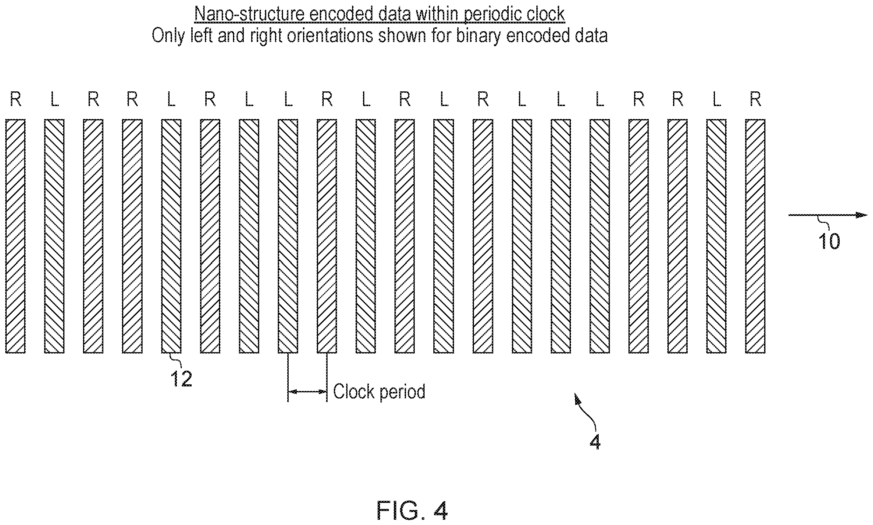

Figure 4 is a schematic illustration of a marking 4 formed on the surface of the object 2 and comprising nanostructures that can be read using the apparatus of Figure 1. The marking 4 comprises polarisation features 12 arranged along an axis of measurement 10.

In this case, the marking 4 comprises a plurality of polarisation features and data is represented using a polarisation property of the polarisation features. In the marking of Figure 4, each polarisation feature comprises a periodic nanostructure, in this case a Laser Induced Periodic Surface Structure (LIPSS), which comprises a plurality of substantially parallel lines with a periodic spacing in a direction perpendicular to the line extent. Formation of LIPSS nanostructures is described in more detail below. In the case of the marking 4 of Figure 4, the period spacing of the nanostructures is 600 nm, but any other suitable period can be chosen in other embodiments.

In Figure 4, each region of LIPSS is drawn as a shaded area, with the direction of shading indicating the orientation of the substantially parallel lines. Each region of LIPSS can be considered to be a separate polarisation feature. In the embodiment of Figure 4, the regions of LIPSS comprise substantially parallel lines arranged at either -45 degrees or +45 degrees relative to the axis of measurement, and referred to in the figure as being either left (L) or right (R) oriented. In this embodiment, the regions of LIPSS are spatially separated. They may alternatively be overlapping or contiguous. The distance between adjacent LIPSS regions is referred to as the incremental period or clock period

Each region of LIPSS is used to represent a binary digit. Each orientation of the lines of the LIPSS regions (for example, +45 degrees and -45 degrees) represents one of the binary states. A plurality of LIPSS regions are arranged to form each marking. Each marking may represent a discrete binary codeword.

Periodic microstructures such as LIPSS distinctively affect the reflection or absorption of polarised light applied to the microstructure, or cause polarisation of light resulting from reflection or transmission of non-polarised light applied to the structure.

Experimental results presented in Spectral and polarization responses of femtosecond laser-induced period surface structures on metals, A.Y. Vorobyev, Chunlei Guo, Journal of Applied Physics, 2008, Vol 103, 043513 illustrate how polarised light aligned parallel or orthogonal to the lines of surface structures experiences different reflectance. Taking numbers from that figure at 800nm (a wavelength often used in optical encoders) shows unpolarised light experiences 95% reflectivity from the untreated surface. This is reduced to 77% after the appearance of LIPSS. Reflectivity of polarised light that is aligned parallel to the lines of surface structure is 71%, versus 87% for light that is aligned orthogonal to the lines of surface structure.

The difference in optical reflectivity for regions having different orientations of the surface microstructure, can be detected using suitable detectors. In order to read the markings of Figure 4, it is necessary to distinguish between the +45 deg polarisation features and -45 deg polarisation features. Although these features can be distinguished by the fact that they reflect different polarisations of light differently, this may not be a very strong effect. Therefore differential pairs of detectors, such as those illustrated in Figures 2 and 3 may be used, and signals from both polarisations may be combined to remove common mode components of the signals.

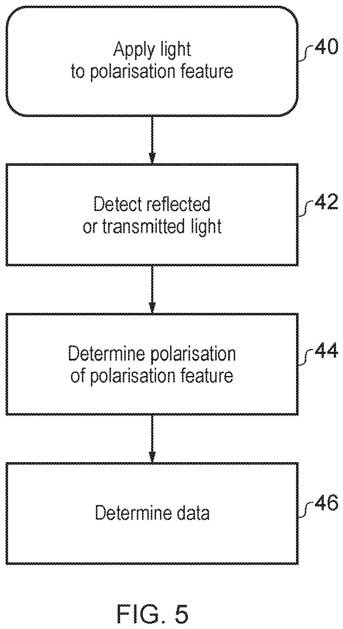

A reading of the marking of Figure 4 is now described with reference to the flowchart shown in Figure 5.

At the first stage of the process 40, light from the light source 22 is applied to and reflected from the surface of the object 2. In this case, the object 2 is positioned so that the light is reflected from a plurality of polarisation features, with light from each one of the polarisation features being received by detectors of a respective one of the detector pairs.

At the next stage 42, the reflected light is detected by the detectors of the two detector arrays 24a, 24b. The detectors of one of the arrays 24a preferentially detect light that is polarised at +45 deg relative to the axis of measurement, and the detectors of the other of the detector arrays 24b preferentially detect light that is polarised at -45 deg.

At stage 44, the resulting signals from each detector is converted into a voltage by a respective I-V converter 28a, 28b. The two converted signals for each detector pair are then input to the differential amplifier 30 for that pair, which outputs a difference signal from which common mode components (including DC components) of the detector signals have been removed. The resulting signal is received by the processor 32, which processes the signal to determine whether the polarisation feature from which that detector pair received reflected light had lines orientated at +45 deg or at -45 deg relative to the axis of measurement, and therefore whether it represented a 0 or a 1 in binary code.

As the detector arrays 24a, 24b include seven detector pairs, each detecting light reflected from a respective polarisation feature, the processor 32 is able to determine the orientation, and consequently the associated binary code value, of up to seven polarisation features of the marking for a given position of the read head 20.

The readhead 20 is then moved to a new position, and stages 40 to 46 are repeated. The data represented by the marking can be accumulated by repeating the reading process of stages 40 to 46 for a series of positions along the marking.

In the case of the marking of Figure 4, the data represented by the marking makes up a code that represents a serial number and manufacturer of an the integrated circuit board on which the marking is formed. After the data has been read the code can be compared to known codes for the manufacturer in order to determine whether the integrated circuit board in this case is authentic, or a fake or unauthorised copy. Reading the data by determining the polarisation of electromagnetic radiation reflected from the nanostructures can provide a particularly robust way of reading the data. The presence of dirt on the surface, or other degradation or damage of the surface, which may occur in practical circumstances may alter the strength or other properties of the reflected signal but the differential detector is still able to distinguish between orthogonal polarisation states in a robust manner.

In the embodiment of Figure 4, the marking on the object 2 is a security marking on an integrated circuit board. In alternative embodiments the marking can represent any suitable type of data and can be applied to any suitable object.

For example, in certain alternative embodiments the marking is a marking on at least one of a microchip, semiconductor device, circuit board, drug packaging, memory device, or recorded music, image, video or text content carrier, medical implants or other medical devices, aircraft parts, artworks, jewellery or other craftworks.

Nanostructure markings can be applied, for example, to objects that may be subject to wear or damage during use. The nanostructure markings can be robust and may, in some cases, survive damage to the object itself sufficiently well to remain readable. For example, in the case of aircraft parts, nanostructure markings may potentially survive an aircraft crash and enable identification of aircraft parts present in the wreckage of the crash, thus assisting in crash investigation.

The data in certain alternative embodiments is representative of at least one of a code, a serial number, a manufacturer, a date, time or location of manufacture, recordal or modification, or an authentication mark.

Although the detectors of the apparatus of Figures 1 to 3 include polarising films to make the detectors polarisation sensitive, in alternative embodiments detectors having different sensitivity to orthogonal polarisations of light can be produced by any suitable method, for example by fitting polarising filters, using Brewster's effect, wire grids, or direct surface structuring. Two identical reader chips can be mounted on two faces of a polarising beam splitter, and the output from the two reader chips can be compared.

Polarising filters are common, inexpensive components that can give good attenuation of light in blocking polarisation orientation, although plastic versions can have moisture sensitivity and glass versions can be difficult to cut. It is possible to orient the detectors or optical elements in front of the detectors to favour the passage of one polarisation orientation utilising Brewster's effect.

Alternatively, fine metal grids can be formed directly onto the detector using an electron beam to write into photo-resist applied to the detector surface. These gratings are a fraction of the wavelength of light so the electron beam is necessary for writing to this spatial resolution. Deposition of a metal layer and removal of the excess resist can then form a fine grid or grating that favours the transmission of a particular orientation of polarised light. This method fits well with the semiconductor fabrication methods used in detector manufacture.

In alternative embodiments, LIPSS themselves may be used on the surface of gratings and, like wire grids, are of negligible thickness. Grids and LIPSS do not give high attenuation of the unfavoured polarisation orientation so differential detection is recommended for high signal discrimination.

In certain embodiments, periodic structures can be formed directly onto the surface of detectors and thereby realise differential absorption of orthogonal polarisations of incoming light.

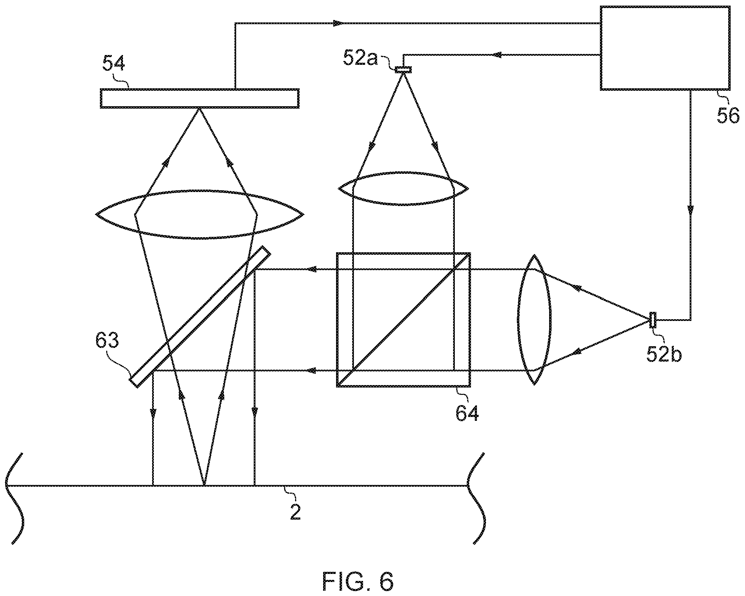

The apparatus of Figures 1 to 3 comprises a source of non-polarised electromagnetic radiation and polarisation-sensitive detectors. In alternative embodiments, the source of electromagnetic radiation is configured to provide polarised electromagnetic radiation and the detector or detectors are not polarisation sensitive. One such embodiment is illustrated in Figure 6, which shows a read head 50 for reading data represented by marking 4 on the surface of object 2.

The read head 50 comprises light sources 52a and 52b, and a detector 54 in the form of a CCD image sensor arranged to capture an image of the surface of the object 2. In this case, the light sources 52a and 52b are operable to irradiate the surface with a light of wavelength in the range 700nm to 900nm, which is longer than the period, 600 nm, of the periodic nanostructures making up the marking 4. The detector 54 in this case does not include any polarising elements but the light sources 52a and 52b include a polarising beam splitter, one optical path being operable to select a first polarisation, in this case +45°, for the first light source 52a and the other optical path being operable to select a second, orthogonal polarisation, in this case -45°, for the second light source 52b.

The read head 50 includes a controller 56 that is operable to direct light from the light sources selectively through one or other of the polarising filters to the surface of the object 2. In operation, the controller 56 controls the light source so that light of +45° and -45° polarisation is applied alternately to the surface, and for each polarisation an image of the surface is captured using the detector 54. For each applied polarisation, those nanostructures forming the marking whose orientation matches the polarisation of the applied light most closely reflect the applied light more strongly than those nanostructures whose orientation does not match the polarisation of the applied light. The location of nanostructures of different orientation can thus be distinguished by the appearance of light and dark bands in the images captured by the detector 54. The controller 56 is configured to process the captured images and to automatically determine the sequence of nanostructures of different orientations from the presence of lighter and darker areas in the captured images.

The unpolarised detector 54 is used to detect the reflected light when illuminated by light of a first polarisation, and then by light of a second polarisation. The detected signals can be compared in a differential manner as described above.

Any other suitable arrangement of polarising light sources and/or polarisation-sensitive detectors can be used to determine the orientation of the nanostructures of the marking. Detectors can be arranged to receive either transmitted or reflected light from the nanostructures.

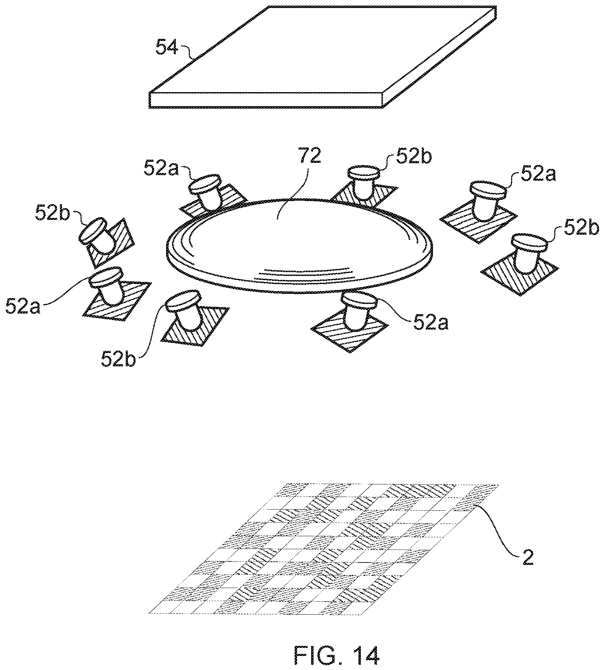

A read head in an alternative embodiment is illustrated schematically in Figure 14, in which like features are referred to using like reference numerals. In this case, the nanostructures of the marking have more than two different polarisation orientations, and the sources 52a and 52b are arranged around the read head in different orientations, thereby enabling light of more than two different polarisations to be applied sequentially to the nanostructures on the object 2. Focusing optics 72 are provided to focus reflected light on the detector 54.

As mentioned above, the polarisation features of the marking of Figure 4 are LIPSS structures. It has been found that such LIPSS structures are particularly useful for representing scale device information on a measurement scale, and they can be formed in a robust and accurate manner by application of laser pulses to a surface. LIPSS may be formed with laser pulses, optionally ultrafast laser pulses, over a relatively large area (the area of an individual detector, for example >10µm in bit occurrence direction with width to suit application, for example 3 mm).

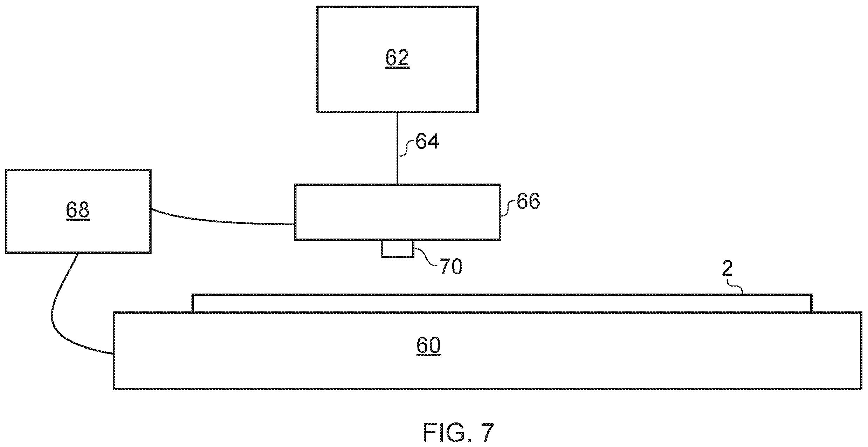

Figure 7 illustrates a system for forming a marking, such as that of Figure 4 in which each periodic nanostructure of the marking comprises a region of LIPSS.

The system comprises a beam 60 on which is mounted substrate 2, in this case the object, on which the marking is to be formed. The system also comprises a carriage 66 comprising a write head 70, a laser unit 62 linked to the write head of the carriage 66 by an optical path 64 and a controller 68. The laser unit 62 includes an ultrafast laser for formation of the LIPSS structures.

In operation laser radiation from the laser unit 62 is supplied to the write head via the optical path 64 and the write head 70 directs the laser radiation to a position on the substrate 2. The controller 68 is operable to control the position of the carriage relative to the beam 60, and to control operation of the laser unit, thereby to apply laser radiation of selected characteristics to any selected position on the substrate 2.

To create the LIPSS structures, the material surface is irradiated with polarised laser pulses of appropriate pulse length, shape and fluence (for example, ultrafast pulses of fluence near the ablation threshold of the surface focused to a line). Lines of surface structure appear orthogonal to the polarisation of the laser light, so rotation of the polarisation of the writing laser beam facilitates formation of binary bits on the scale surface. The period of the lines is characteristic of the surface material and the wavelength of the laser.

In the embodiment of Figure 7 an ultrafast pulse laser unit 62 is used, during one or more passages of the carriage 66, to form regions of LI PSS that are orientated at +45 deg to the axis of measurement and so write all the positive binary states. On the next passage of the carriage 66, the polarisation of the ultrafast laser is rotated by -90 deg (to -45 deg relative to the axis of measurement) and writes the negative data regions onto the scale.

The laser used to create the LIPSS structures in the embodiment of Figure 7 is an ultrafast laser with an energy near the ablation threshold (just above the ablation threshold for single pulse writing, just above or just below the ablation threshold for multi-pulse writing). A succession of pulses is applied to the surface. Each pulse can be shaped to produce features 4mm wide and 10µm long, and the substrate is moved relative to the laser at a velocity determined by the laser repetition rate, width of the affected surface and number of pulses required. Alternatively the laser beam (for example of diameter 10 µm) may be raster scanned to obtain periodic nanostructures having the desired width.

Once a LI PSS structure has been formed by one or more laser pulses, subsequent pulses of the same polarisation applied to the same region will lock into the existing pattern and maintain the periodicity and phase of the original structure, thus allowing an extended region of LIPSS to be built up from multiple pulses. That feature of LIPSS formation enables polarisation features of suitable size and uniformity for use as marking features to be formed in a straightforward and reliable manner.

The pulsed laser process can be used to form LIPSS on any appropriate surface. In the embodiment of Figure 4, LIPSS structures are formed on the surface of an integrated circuit board. However, in alternative embodiments markings comprising LIPSS or other polarisation features can be written onto any appropriate material or object.

Silver and stainless steel have both been shown to form LIPSS as have many other metals, for example nickel, gold, titanium. The first report of LIPSS observed periodic structures on various semiconductors after surface damage caused by a ruby laser pulse or pulses. Since that report there have been many studies with semiconductors including Si, Ge, InP, GaP, GaAs and other compound semiconductors. LIPSS have been made on fused silica. However, LIPSS can also be formed of a wide variety of other materials, whether metals, dielectrics or semiconductors. Indeed, LIPSS may be formed on any materials capable of forming a surface plasmon, for example under conditions found during exposure to intense electromagnetic field such as that from a laser pulse near the ablation threshold of the material.

In the embodiment of Figure 4, each polarisation feature reflects electromagnetic radiation in a first direction of polarisation more strongly than it reflects electromagnetic radiation in a second direction of polarisation. In alternative embodiments the polarisation features, for example LIPSS or other periodic nanostructures transmit rather than reflect applied electromagnetic radiation, with a preferred polarisation direction. In either cases, a preferential direction of polarisation can be established and this preferential direction of polarisation used to represent scale device information. In specific embodiments, the electromagnetic radiation in question is light in the visible, near-ultraviolet or near-infrared range.

Whilst it has been found that LIPSS provides an advantageous technique for creating scale markings comprising periodic nanostructures, in alternative embodiments other methods can be used to create the periodic nanostructures, for example replication, electron beam lithography, focused ion beam, photoetching (in ultraviolet) or semiconductor fabrication lithography.

In the embodiment of Figure 4, the marking comprises periodic nanostructures with orthogonal orientations, and the data represented by the scale markings is encoded by the corresponding orthogonal polarisations that are produced by the periodic nanostructures. In alternative embodiments, markings are provided with intermediate polarisations as well as with orthogonal polarisations. Such embodiments can allow data to be implemented in base 3 or more, instead of coding the data in binary. That can increase code robustness or the number of unique codes available.

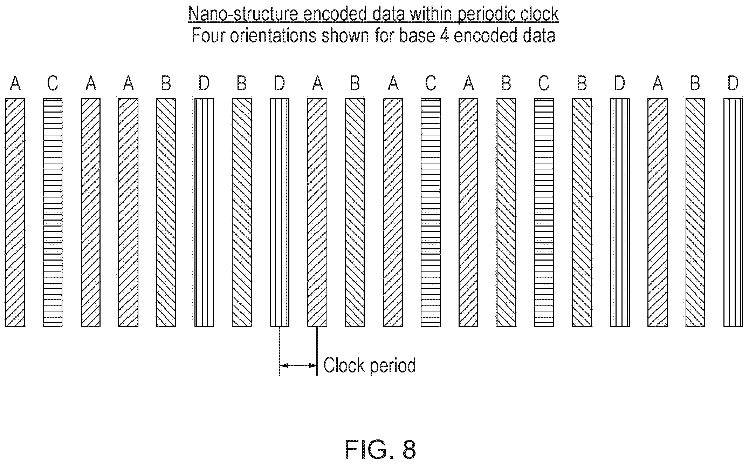

A marking comprising periodic nanostructures having four different orientations, and thus allowing encoding of data in base 4 is illustrated schematically in Figure 8 by way of example. Regions of LIPSS of 0°, +45°, -45° and 90° are used in an alternating sequence to encode data.

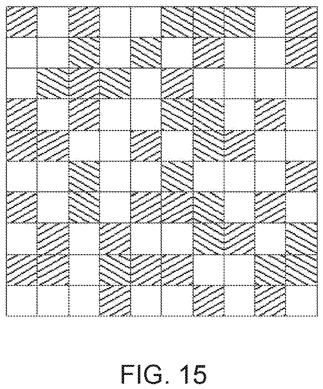

In the embodiment of Figures 4 and 8, each polarisation feature is a region of LIPSS in which all the parallel lines are in a single orientation. The regions of LIPSS may be separated as shown in Figures 4 and 8. Alternatively, one or more of the regions of LIPSS may be contiguous to a region of LIPSS of a different orientation, such that a discontinuity occurred at the boundary between them. An example of such an arrangement is shown in Figure 15, in which a marking comprising an array of nanostructures each having an orientation of either +45° or -45°.

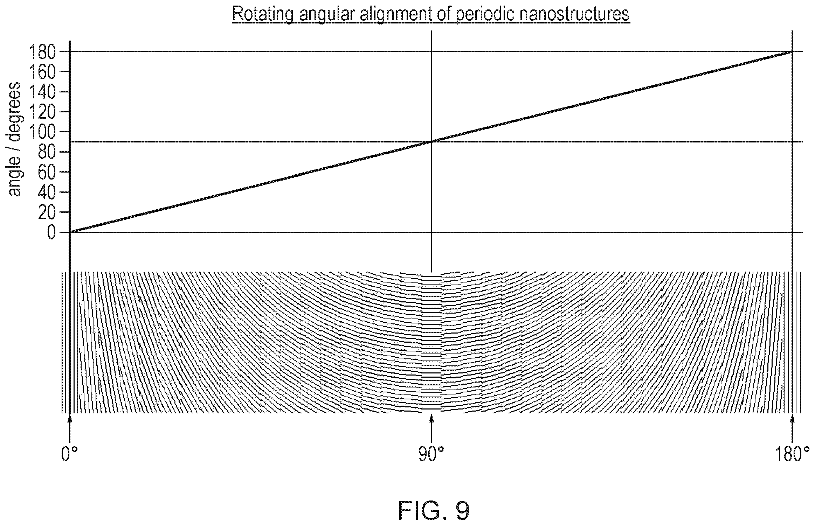

In alternative embodiments, a polarisation feature comprises an extended region of LIPSS or other nanostructure in which the orientation of the lines varies with displacement through the lateral extent of the polarisation feature. A polarisation feature of that type according to one embodiment is illustrated schematically in Figure 9.

A single polarisation feature of the type shown in Figure 9 may be used, for example, as a reference marker or fiducial. A detector can be configured to detect a preferential direction of polarisation. The reference position can be defined as the point at which the preferential direction of polarisation matches the orientation of a part of the extended region of LIPSS or other nanostructure. Alternatively, the detector has polarisation sensitivity matched to the polarisation alteration along the length of the reference mark; reference position being when the entire polarisation encoded regions align to give a distinct correlation output; an autocorrelator for polarisation encoded data. Such an encoded region could be an encoded word particularly suited to correlation (such as a modified Barker code) or angle of polarisation where angle of polarisation continually or monotonically increases with distance along the feature and matched detector.

In variants of the embodiment described in the preceding paragraph, a series of the polarisation features of varying polarisation are written contiguously to form an extended region. A series of positions may be determined, each position being determined when the preferential direction of polarisation matches the orientation of the parallel lines, thus determining a sequence of equally-spaced marks.

Detectors that read intermediate polarisations are provided in alternative embodiments, such as that of Fig. 14. Alternatively, the processor or associated circuitry interpolates measurements by differential pairs of detectors, thereby to measure the polarisation of light reflected or transmitted by regions of the marking that do not perfectly align with the polarisation of either of the detectors of the pairs. In this way, an analogue signal representing the polarisation of a region of the scale, whether aligned with any sensor or not, can be generated.

In some embodiments of the measurement scale, the polarisation features are contiguous. In others, they are separate or overlap.

In certain embodiments, a marking comprising periodic nanostructures overlaps with other markings, for example other markings used to represent data. In some cases the markings comprising periodic nanostructures are formed on top of such other markings. Such overlaid nanostructure markings can be particularly useful when applied to measurement scales, as they can, for example, allow absolute measurement scales to be overlaid on incremental measurement scales.

The marking of measurement scales with nanostructures is the subject of a co-pending patent application entitled "Measurement Scale", in the name of the applicant for the present application, the contents of which co-pending patent application are hereby incorporated by reference.

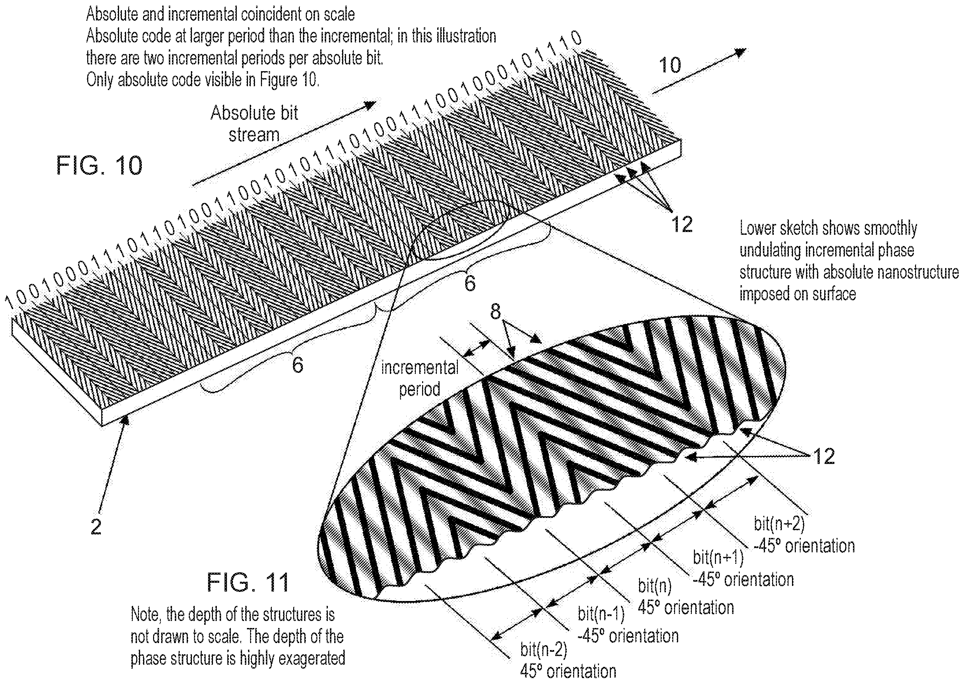

Figure 10 shows an embodiment of a measurement scale device 2, comprising a scale 4 comprising a plurality of scale markings (as shown in Fig. 4). A series of absolute scale markings 6 formed of periodic nanostructures is overlaid on a series of incremental scale markings 8 along a common axis of measurement 10. The absolute scale markings 6 and incremental scale markings 8 are independently readable. Only the absolute scale markings 6 are illustrated in Figure 10, for clarity.

Figure 11 is an illustration of an enlarged portion of the scale of Figure 10, and shows both the absolute scale markings 6 and the incremental scale markings 8.

In the embodiment of Figures 10 and 11, the series of incremental scale markings 8 is made up of a substantially sinusoidal profile of peaks and troughs with amplitude about one quarter of the wavelength of operational light (in reflection) or about half the wavelength of operational light (in transmission) formed by laser heating of the surface of the scale as described, for example, in WO2012/038707 in the name of the applicant, which is hereby incorporated by reference. The scale device 2 is made of 304 stainless steel and the peaks and troughs are formed on the surface of the 304 stainless steel. The peaks and troughs are illustrated in Figure 2, but the peak-to-trough height has been exaggerated to make it visible on the drawing. In this embodiment, the peak-to-trough height is 200nm and the spacing between adjacent peaks is 8µm. Each of the incremental scale markings can be considered to comprise a complete cycle of the periodic surface.

The series of absolute scale markings 6 is written onto the series of incremental scale markings 8. Each of the absolute scale markings 6 comprises a plurality of polarisation features and absolute position data is represented using a polarisation property of the polarisation features. Each polarisation feature comprises a periodic nanostructure, in this case a Laser Induced Periodic Surface Structure (LIPSS). Each region of LIPSS is used to represent a binary digit. Each orientation of the lines of the LIPSS regions (for example, +45 degrees and -45 degrees) represents one of the binary states. A plurality of LIPSS regions are arranged to form each absolute scale marking. Each absolute scale marking is a discrete binary codeword that is used to mark a unique position along the axis of measurement.

For example, in Figure 11, four polarisation features, labelled n-1, n, n+1 and n+2 are shown in whole or part. Each polarisation feature represents a bit, and in this case it can be seen that those bits have values of 0, 1, 0 and 1. Those four bits make up part of a single code word that identifies the portion of the scale on which the polarisation features are located.

The scale device information of Figures 10 and 11 can be read using a modified version of the readhead of Figures 1 to 3, which is modified to include a phase scale detection unit that is operable to read the incremental scale markings using conventional techniques. The phase scale detection unit 22 is able to read the incremental scale independently of the reading of the absolute scale by the readhead 20.

The size of the readhead 20 and the number of detectors can be chosen such that, whatever the position of the readhead 20 relative to the marking, it can always read enough polarisation features at a given position of the read head to constitute at least one full codeword.

The absolute scale markings of the measurement scale of Figures 10 and 11 can be read using the readhead 20 in the same way as described above in relation to the reading of the marking of Figure 4.

Whilst the absolute scale is being read by the readhead 20, the phase scale detection unit reads the incremental scale markings 8 using known techniques, for example as described in EP 0207121. In operation, unpolarised light applied by a light source of the phase scale detection unit reflects from a plurality of peaks and troughs of the incremental scale and the phase scale detection unit 22 is able to detect using known techniques based on constructive or destructive interference patterns of the reflected light depending on the position of the readhead 20 relative to the scale 2. The incremental scale can be interpolated many times limited only by the mean accuracy of the periodic region read by the read head and noise.

The absolute position may be combined with incremental scale information determined by the processor 32 using the phase scale detection unit in order to interpolate between the absolute position markings.

As the absolute scale markings 6 and the incremental scale markings 8 are provided overlaid on a single measurement axis in the embodiment of Figures 10 and 11, both sets of scale markings can be measured using the same readhead 20, and errors due to yaw effects can be reduced or eliminated.

The presence of the polarisation features 12 overlaid on the troughs and peaks of the incremental scale markings 8 can cause some variation in the reflectivity of the incremental scale markings even for unpolarised light. The symmetrical design shown (with ±45° alignment of nanostructures) minimises reflectivity difference between states.

The measurement scale of Figures 10 and 11 is formed by the system of Figure 7 using two distinct laser processes. First the incremental scale markings are formed and then the absolute scale markings are formed by writing LIPSS polarisation features.

In the first process, the incremental scale is formed by melting the surface of the substrate as described in WO 2012/038707. Laser pulses of tens of nanoseconds duration are applied by the laser unit 62 via the write head 70. The laser pulses are delivered to the point of writing by the optical path 64 linking the laser 62 to the carriage 66, alternatively the laser 62 moves with the carriage 66. The carriage 66 is capable of movement along the length of the beam and is equipped with accurate position feedback (via the controller 68) to ensure that the melted regions are placed correctly with a desired accuracy. The formation of the incremental scale may take one or more passes of the carriage 66 along the scale length. For instance, a smoothly undulating surface profile with a period of, for example, 4 µm or 8 µm and mean peak-to-trough distance of, for example, 190 nm or 200 nm can be made on 304 stainless steel by melting with laser pulses of tens of nanoseconds duration.

In the second process, the LIPSS structures making up the absolute scale markings are then written onto the incremental scale markings.

The lateral extent of each polarisation feature forming part of a first series of scale marking is selected in dependence on a parameter of a second series of scale markings in certain embodiments. For example, in embodiments in which the second series of scale markings is an amplitude scale, regions of LIPSS structures may be written over the entire area in which the second series of scale markings is present. That can help to reduce variations in reflectivity of the scale with regard to unpolarised light caused by the presence or absence of overlaid LIPSS structures or other nanostructures.

Where the second series of scale markings is an incremental scale, the lateral extent of polarisation features is selected in certain embodiments in dependence on incremental period of the second series of scale markings. For example, the lateral extent of each polarisation feature is selected to be a non-integer multiple of the incremental period in some embodiments, for instance 1.5 times the size of the incremental period, or a prime multiple such as 3.7 times.

The lateral extent of each polarisation feature in a direction along the measurement axis can be chosen to have any suitable value, for example between 1µm and 100µm. Multiple laser pulses can be used to build up extended areas of LIPSS.

Scale markings comprising polarisation features representing scale device information using a polarisation property are not limited to being absolute scale markings but instead, in alternative embodiments, represent any desired type of marking.

In various embodiments, the scale markings comprising at least one nanostructure can represent either position information or non-position related data concerning the scale or scale device. In some embodiments, the scale markings represent for example, a serial number of the scale, a manufacturer or other identifier, or authentication or security data.

In certain embodiments, the scale device information represented by a polarisation property is an indication of a limit. A limit mark is used to indicate the end of a scale. A limit mark in certain embodiments comprises a polarisation feature, for example a LIPSS structure, marking an end of a scale. Limit patterns of different polarisations are used at each end of the scale to indicate which limit is being read, in some embodiments. In alternative embodiments, limits are implemented with different polarisations written across the scale (perpendicular to the measurement axis), with one polarisation to a first side of the measurement axis and another to a second side, with the two polarisations reversed at the opposite end of the scale.

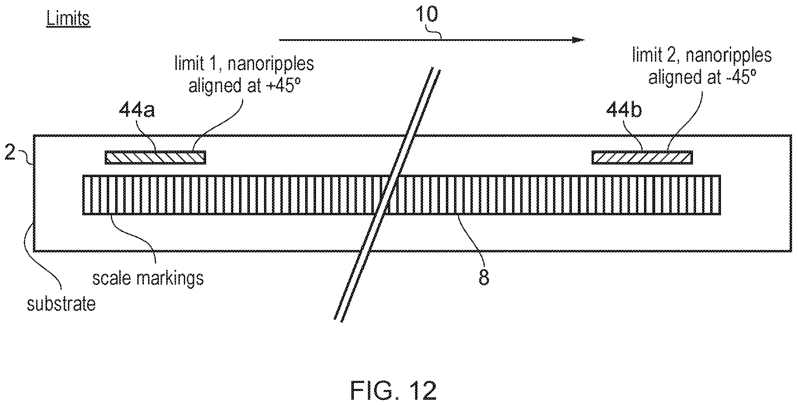

Figure 12 shows a simplified drawing of a scale comprising a series of scale markings 8 (which may or may not comprise polarisation features) and a pair of limit marks 44a, 44b. A first limit mark 44a is a region of LIPSS orientated at +45 deg relative to axis of measurement 10, and a second limit mark 44b is a region of LIPSS orientated at -45 deg relative to the axis of measurement. Therefore the ends of the scale may be distinguished by differential detection of polarised light to determine the different orientations of the marks.

In other embodiments, the scale device information represented by a polarisation property is an indication of a reference position. On incremental scales, reference marks are used to indicate known positions enabling determination of incremental position with reference to such known positions. A reference mark according to an embodiment comprises a transition between two regions of orthogonal polarisation written onto the scale. In this case split pairs of differential readers are used to generate a sum and difference signal in the usual way for detection of reference marks. In other embodiments, reference marks comprising polarisation features are more complex and in some cases comprise a divergent autocorrelation pattern or cross-correlation pattern, or comprise codewords, and/or have a polarisation property that rotates along the linear extent of the reference mark. In embodiments, in which a reference mark comprises a polarisation feature the reference mark can be separate from a series of scale markings, or can be overlaid on, overlapping with, or interleaved with a series of scale markings.

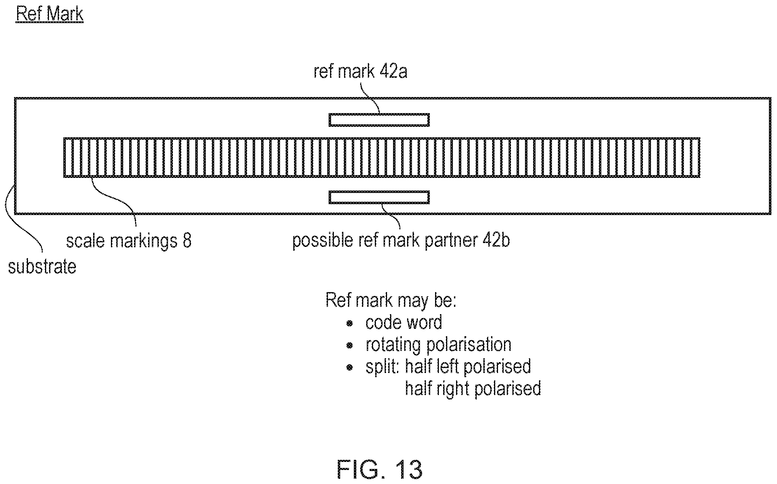

Figure 13 is a simplified diagram of a series of scale markings 8. A reference mark 42a above the scale. The reference mark indicates a reference position. It is paired with another reference mark 42b on the opposite side of the scale for accurate reference positioning over a range of yaw alignment. The reference marks comprise regions encoded in periodic nanostructures having angles of alignment of the nanostructure features of +45 degrees or -45 degrees, but any other suitable polarisation property can be used in alternative embodiments. Reference marks can be drawn on one or both sides of the scale in alternative embodiments.

In other embodiments, a scale marking comprising at least one nanostructure represents a direction marker, which indicates a direction to a scale feature, for example a direction to one end of the scale or a direction to a position mark or reference mark.

In other embodiments, marks comprising at least one periodic nanostructure are used to encode error information, for example an error map or error codes. In certain embodiments such marks are overlaid on top of or near an existing series of incremental or absolute scale markings. The incremental or absolute series of scale markings may include some position errors due to errors during formation. The errors are determined by interferometer measurements performed in a vacuum in accordance with known techniques. Error marks comprising at least one periodic nanostructure are then written at a series of positions along the scale and represent the error in the incremental or absolute scale pertaining at each of those positions. In some such embodiments, the error is represented by the polarisation angle or angle of orientation of a periodic nanostructure, which angle is allowed to take any one of a continuous series of angles. Thus the error can be read as an analogue signal, which can reduce processing requirements.

In the embodiment of Figures 10 and 11, an incremental scale is formed using a known process and then absolute scale marking are overlaid on the incremental scale markings. Embodiments are not limited to such an arrangement, and LIPSS or other techniques can be used to form scale marks comprising polarisation features in any desired arrangement. For example, in alternative embodiments, the absolute scale markings are arranged such that they overlap the incremental scale markings, or such that the absolute scale markings and incremental scale markings are interleaved, or spatially separated. In any of these cases, the absolute scale markings and incremental scale markings can be formed so that they share a common axis of measurement.

As mentioned, in alternative embodiments, the scale markings that comprise polarisation features are incremental scale markings or reference marks rather than absolute scale markings. In some embodiments, the scale also includes a second series of scale markings of any desired type, for example absolute scale markings, incremental scale markings, or reference marks. In such embodiments, the second series of scale markings is not limited to being optically read. The second series of scale markings can represent scale device information in any suitable way, for example any way that is independently readable with regard to the first series of scale markings. For instance, in some embodiments, the second series of scale marking represent scale device information with an optical parameter, a magnetic parameter or a capacitive parameter.

Examples of types of scale markings that can be used for the second series of scale features include scale markings of etched glass, etched metal, laser ablated metal, forged metal, chromed regions on glass with mirror back, chrome on glass Ronchi, magnetic regions, capacitive (permittivity regions). Each of these scales has a surface that can be selectively modified by the addition of periodic nanostructures, for example LIPSS structures.

In one embodiment, LIPSS or other polarisation features representing absolute scale markings are added to rectangular profile scale gratings that are etched in glass and gold plated. Existing scale designs, for example Renishaw (RTM) RG, spar, rings or ribbon scale can have regions of LIPSS or other polarisation features added to form reference marks, absolute data or other additional information.

LIPSS regions can be added to a measurement scale comprising a series of scale markings, as an additional step in the usual fabrication process. Alternatively, LIPSS may be added at any time after the second series of scale markings has been formed. LIPSS regions may be retrofitted to any appropriate existing scale.

LIPSS have been produced using lasers that range from continuous wave to femtosecond lasers. The first embodiment described using a laser intensity that is just above the ablation threshold. However, this does not discount other regimes. Any laser and associated set of operating conditions that is capable of forming LIPSS on a suitable surface can be used.

The measurement scales is not limited to being a linear scale for measurement along a single measurement axis. The measurement scales of alternative embodiments include, for example, rotary scales. The scales in certain embodiments are two-dimensional scales, having two substantially orthogonal axes of measurement, and scale markings comprising polarisation features are arranged along one or both axes of measurement.

It will be understood that the present invention has been described above purely by way of example, and modifications of detail can be made within the scope of the invention.

Each feature disclosed in the description, and (where appropriate) the claims and drawings may be provided independently or in any appropriate combination.

## Claims

1. A method of reading data represented by a marking (4) comprising at least one periodic nanostructure (12), such as a Laser Induced Periodic Surface Structure (LIPSS), the or each nanostructure (12) comprising a plurality of substantially parallel lines, the marking (4) representing data using a polarisation property of the periodic nanostructure (12), and the method comprising:-
detecting polarised electromagnetic radiation reflected from or transmitted by the nanostructure (12); and
determining the data represented by the making (4) from the detected polarised
electromagnetic radiation, wherein:-
the method further comprises applying polarised electromagnetic radiation to the nanostructure (12), and/or
the detecting is performed using a polarisation-sensitive detector apparatus (24a,24b)

2. A method according to Claim 1, wherein the or each nanostructure comprises a Laser Induced Periodic Surface Structure (LIPSS).

3. A method according to Claim 1 or 2, wherein the nanostructure is a periodic nanostructure having a period between 10 nm and 1µm, optionally between 300 nm and 900 nm.

4. A method according to any preceding claim, wherein the applied electromagnetic radiation has a maximum intensity at a wavelength that is greater than the period of the periodic nanostructure.

5. A method according to any preceding claim, wherein the detecting of polarised electromagnetic radiation reflected from or transmitted by the nanostructure comprises detecting a first signal representative of electromagnetic radiation of a first polarisation, detecting a second signal representative of electromagnetic radiation of a second, different polarisation and determining a difference between the first and second signals.

6. A method according to any preceding claim, wherein the polarisation-sensitive detector apparatus comprises at least one pair of polarisation-sensitive detectors, and first detector of the pair has maximum sensitivity to a different polarisation than the second detector of the pair, each detector being configured to provide a respective output signal representative of detected electromagnetic radiation, and
optionally:-
the method further comprises, for the or each pair of detectors, determining a difference between the output signals obtained using the first detector and the second detector.

7. A method according to any of Claims 1 to 5, wherein the applied electromagnetic radiation comprises polarised electromagnetic radiation, and at least one of a) and b):-
a) the applying of the electromagnetic radiation to the nanostructure comprises applying in sequence electromagnetic radiation of different polarisations to the nanostructure;
b) the method comprises detecting electromagnetic radiation reflected or transmitted from the nanostructure using a substantially non-polarisation sensitive detector apparatus.

8. A method according to any preceding claim, wherein the marking comprises a plurality of nanostructures, each nanostructure representing a respective data value using a polarisation property of the nanostructure, and the method comprises determining the data values from the detected polarised electromagnetic radiation.

9. A method according to any preceding claim, wherein the marking is a marking on at least one of a microchip, semiconductor device, circuit board, drug packaging, memory device, or recorded music, image, video or text content carrier, medical implants or other medical devices, aircraft parts, artworks, jewellery or other craftworks.

10. A method according to any preceding claim, wherein the data is representative of at least one of:- a code; a serial number; a manufacturer; a date, time or location of manufacture, recordal or modification; an authentication mark.

11. A method according to any preceding claim, wherein the at least one marking comprises at least one marking on a measurement scale device and the method comprises determining a location from the data determined from the detected polarised electromagnetic radiation.

12. A method according to Claim 11, wherein the at least one marking comprises a plurality of scale markings forming a first series of scale markings, and the measurement scale further comprises a second series of scale markings, and the method comprises determining a location on the measurement scale from both the first series of scale markings and the second series of scale markings, and
optionally:-.
wherein the first series of scale markings and the second series of scale markings are overlaid and share a common axis of measurement; and/or
wherein the first series of scale markings comprises one of absolute scale markings and incremental scale markings, and the second series of scale markings comprises another of absolute scale markings and incremental scale markings, and the method comprises reading the first series of scale markings and the second series of scale markings.

13. An apparatus for reading data represented by a marking (4) comprising at least one periodic nanostructure (12) such as a Laser Induced Periodic Surface Structure (LIPSS), the or each nanostructure (12) comprising a plurality of substantially parallel lines, the marking (4) representing data using a polarisation property of the periodic nanostructure, and the apparatus comprising:-
a detector apparatus (24a, 24b, 54) for detecting polarised electromagnetic radiation reflected from or transmitted by the nanostructure (12); and
a processing resource (32) configured to determine the data represented by the marking from the detected polarised electromagnetic radiation, wherein:-
the apparatus further comprises a source of electromagnetic radiation (52a, 52b) configured (56) to apply polarised electromagnetic radiation to the nanostructure (12), and/or
the detector apparatus comprises a polarisation-sensitive detector apparatus (24a, 24b).

14. An object (2) having a marking (4) comprising at least one periodic nanostructure (12), such as a Laser Induced Periodic Surface Structure (LIPSS), the or each nanostructure comprising a plurality of substantially parallel lines, the marking representing data using a polarisation property of the periodic nanostructure and being readable by an apparatus according to claim 13.

15. An object (2) according to Claim 14, being at least one of a high value article and
an item requiring robust traceability, such as a microchip, a semiconductor device, a circuit board, drug packaging, a memory device, a content carrier (e.g. for recorded music, image, video or text), a medical implant or other medical device, an aircraft part, an artwork, an item of jewellery or other craftwork.

## Patentansprüche

1. Verfahren zum Lesen von Daten, die durch eine Markierung (4) repräsentiert sind, die mindestens eine periodische Nanostruktur (12) umfasst, etwa eine durch Laser induzierte periodische Oberflächenstruktur (LIPSS), wobei die oder jede Nanostruktur (12) eine Vielzahl von im Wesentlichen parallelen Linien umfasst, die Markierung (4) Daten unter Verwendung einer Polarisationseigenschaft der periodischen Nanostruktur (12) repräsentiert, und das Verfahren umfasst, dass:
eine polarisierte elektromagnetische Strahlung detektiert wird, die von der Nanostruktur (12) reflektiert oder durch diese übertragen wird; und
die Daten, die durch die Markierung (4) repräsentiert werden, aus der detektierten polarisierten elektromagnetischen Strahlung bestimmt werden,
wobei:
das Verfahren ferner umfasst, dass eine polarisierte elektromagnetische Strahlung auf die Nanostruktur (12) aufgebracht wird und/oder das Detektieren unter Verwendung einer polarisationsempfindlichen Detektionsvorrichtung (24a, 24b) ausgeführt wird.

2. Verfahren nach Anspruch 1, wobei die oder jede Nanostruktur eine durch Laser induzierte periodische Oberflächenstruktur (LIPSS) umfasst.

3. Verfahren nach Anspruch 1 oder 2, wobei die Nanostruktur eine periodische Nanostruktur ist, die eine Periode zwischen 10 nm und 1 µm, optional zwischen 300 nm und 900 nm aufweist.

4. Verfahren nach einem der vorstehenden Ansprüche, wobei die aufgebrachte elektromagnetische Strahlung eine maximale Intensität bei einer Wellenlänge aufweist, die größer als die Periode der periodischen Nanostruktur ist.

5. Verfahren nach einem der vorstehenden Ansprüche, wobei das Detektieren der polarisierten elektromagnetischen Strahlung, die von der Nanostruktur reflektiert oder durch diese übertragen wird, umfasst, dass ein erstes Signal detektiert wird, das eine elektromagnetische Strahlung mit einer ersten Polarisation repräsentiert, dass ein zweites Signal detektiert wird, das eine elektromagnetische Strahlung mit einer zweiten, anderen Polarisation repräsentiert, und dass ein Unterschied zwischen dem ersten und zweiten Signal bestimmt wird.

6. Verfahren nach einem der vorstehenden Ansprüche, wobei die polarisationsempfindliche Detektionsvorrichtung mindestens ein Paar polarisationsempfindlicher Detektoren umfasst, und ein erster Detektor des Paars eine maximale Empfindlichkeit für eine andere Polarisation als der zweite Detektor des Paars aufweist, wobei jeder Detektor ausgestaltet ist, um ein jeweiliges Ausgabesignal bereitzustellen, das eine detektierte elektromagnetische Strahlung repräsentiert, und
optional:
das Verfahren ferner umfasst, dass für das oder für jedes Paar von Detektoren ein Unterschied zwischen den Ausgabesignalen bestimmt wird,
die unter Verwendung des ersten Detektors und des zweiten Detektors erhalten werden.

7. Verfahren nach einem der Ansprüche 1 bis 5, wobei die aufgebrachte elektromagnetische Strahlung eine polarisierte elektromagnetische Strahlung umfasst, und mindestens eines von a) und b):
a) wobei das Aufbringen der elektromagnetischen Strahlung auf die Nanostruktur umfasst, dass eine elektromagnetische Strahlungssequenz mit unterschiedlichen Polarisierungen auf die Nanostruktur aufgebracht wird;
b) wobei das Verfahren umfasst, dass eine elektromagnetische Strahlung, die von der Nanostruktur reflektiert oder durch diese übertragen wird, unter Verwendung einer im Wesentlichen nicht polarisationsempfindlichen Detektionsvorrichtung detektiert wird.

8. Verfahren nach einem der vorstehenden Ansprüche, wobei die Markierung eine Vielzahl von Nanostrukturen umfasst, jede Nanostruktur einen jeweiligen Datenwert unter Verwendung einer Polarisationseigenschaft der Nanostruktur repräsentiert und das Verfahren umfasst, dass die Datenwerte aus der detektierten polarisierten elektromagnetischen Strahlung bestimmt werden.

9. Verfahren nach einem der vorstehenden Ansprüche, wobei die Markierung eine Markierung auf einem Mikrochip und/oder auf einer Halbleitervorrichtung und/oder auf einer Schaltungsplatine und/oder auf einer Medikamentenverpackung und/oder auf einer Speichervorrichtung und/oder auf einem Träger mit aufgezeichneter Musik, aufgezeichneten Bildern, aufgezeichnetem Video- oder Textinhalt, auf medizinischen Implantaten oder anderen medizinischen Geräten, auf Flugzeugteilen, auf Kunstwerken, auf Schmuck oder auf anderem Kunsthandwerk ist.

10. Verfahren nach einem der vorstehenden Ansprüche, wobei die Daten einen Code und/oder eine Seriennummer und/oder einen Hersteller und/oder ein Datum, eine Uhrzeit oder einen Ort der Herstellung, Aufzeichnung oder Modifikation und/oder eine Authentifizierungsmarke repräsentieren.

11. Verfahren nach einem der vorstehenden Ansprüche, wobei die mindestens eine Markierung mindestens eine Markierung auf einer Messskalenvorrichtung umfasst und das Verfahren umfasst, dass ein Ort aus den Daten bestimmt wird, die aus der detektierten polarisierten elektromagnetischen Strahlung bestimmt wurden.

12. Verfahren nach Anspruch 11, wobei die mindestens eine Markierung eine Vielzahl von Skalenmarkierungen umfasst, die eine erste Folge von Skalenmarkierungen bilden, und die Messskala ferner eine zweite Folge von Skalenmarkierungen umfasst, und das Verfahren umfasst, dass ein Ort auf der Messskala aus sowohl der ersten Folge von Skalenmarkierungen als auch der zweiten Folge von Skalenmarkierungen bestimmt wird, und optional:
wobei die erste Folge von Skalenmarkierungen und die zweite Folge von Skalenmarkierungen überlagert werden und sich eine gemeinsame Messachse teilen; und/oder
wobei die erste Folge von Skalenmarkierungen entweder absolute Skalenmarkierungen oder inkrementelle Skalenmarkierungen umfasst, und
die zweite Folge von Skalenmarkierungen entweder andere absolute Skalenmarkierungen oder andere inkrementelle Skalenmarkierungen umfasst, und das Verfahren umfasst, dass die erste Folge von Skalenmarkierungen und die zweite Folge von Skalenmarkierungen gelesen werden.

13. Vorrichtung zum Lesen von Daten, die durch eine Markierung (4) repräsentiert sind, die mindestens umfasst:
eine periodische Nanostruktur (12), etwa eine durch Laser induzierte periodische Oberflächenstruktur (LIPSS), wobei die oder jede Nanostruktur (12) eine Vielzahl von im Wesentlichen parallelen Linien umfasst, wobei die Markierung (4) Daten unter Verwendung einer Polarisationseigenschaft der periodischen Nanostruktur repräsentiert und die Vorrichtung umfasst:
eine Detektionsvorrichtung (24a, 24b, 54) zum Detektieren einer polarisierten elektromagnetischen Strahlung, die von der Nanostruktur (12) reflektiert oder durch diese übertragen wird, und
eine Verarbeitungsressource (32), die ausgestaltet ist, um die Daten, die von der Markierung repräsentiert werden, aus der detektierten polarisierten elektromagnetischen Strahlung zu bestimmen, wobei:
die Vorrichtung ferner eine Quelle einer elektromagnetischen Strahlung (52a, 52b) umfasst, die ausgestaltet ist (56), um eine polarisierte elektromagnetische Strahlung auf die Nanostruktur (12) aufzubringen, und/oder
wobei die Detektionsvorrichtung eine polarisationsempfindliche Detektionsvorrichtung (24a, 24b) umfasst.

14. Objekt (2), das eine Markierung (4) aufweist, die mindestens eine periodische Nanostruktur (12) umfasst, etwa eine durch Laser induzierte periodische Oberflächenstruktur (LIPSS), wobei die oder jede Nanostruktur eine Vielzahl von im Wesentlichen parallelen Linien umfasst, die Markierung Daten unter Verwendung einer Polarisationseigenschaft der periodischen Nanostruktur repräsentiert und durch eine Vorrichtung nach Anspruch 13 lesbar ist.

15. Objekt (2) nach Anspruch 14, das ein Artikel mit hohem Wert und/oder ein Gegenstand ist, der eine robuste Nachverfolgbarkeit benötigt, etwa ein Mikrochip, eine Halbleitervorrichtung, eine Schaltungsplatine, eine Medikamentenverpackung, eine Speichervorrichtung, ein Inhaltsträger (z.B. für aufgezeichnete Musik, Bilder, Video oder Text), ein medizinisches Implantat oder eine andere medizinische Vorrichtung, ein Flugzeugteil, ein Kunstwerk, ein Schmuckgegenstand oder ein anderes Kunsthandwerk.

## Revendications

1. Procédé de lecture de données représentées par un marquage (4) comprenant au moins une nanostructure périodique (12), telle qu'une Structure de Surface Périodique Induite par Laser (LIPSS), la nanostructure ou chaque nanostructure (12) comprenant une pluralité de lignes substantiellement parallèles, le marquage (4) représentant des données en utilisant une propriété de polarisation de la nanostructure périodique (12) et le procédé comprenant le fait :
- de détecter un rayonnement électromagnétique polarisé réfléchi ou transmis par la nanostructure (12) ; et
- de déterminer les données représentées par le marquage (4) à partir du rayonnement électromagnétique polarisé détecté, dans lequel :
- le procédé comprend en outre le fait d'appliquer un rayonnement électromagnétique polarisé sur la nanostructure (12), et / ou
- la détection est effectuée en utilisant un appareil de détection sensible à la polarisation (24a, 24b)

2. Procédé selon la revendication 1, dans lequel la nanostructure ou chaque nanostructure comprend une Structure de Surface Périodique Induite par Laser (LIPSS).

3. Procédé selon la revendication 1 ou 2, dans lequel la nanostructure est une nanostructure périodique ayant une période comprise entre 10 nm et 1 µm, éventuellement entre 300 nm et 900 nm.

4. Procédé selon l'une des revendications précédentes, dans lequel le rayonnement électromagnétique appliqué présente une intensité maximale à une longueur d'onde supérieure à la période de la nanostructure périodique.

5. Procédé selon l'une des revendications précédentes, dans lequel la détection d'un rayonnement électromagnétique polarisé réfléchi ou transmis par la nanostructure comprend le fait de détecter un premier signal représentant le rayonnement électromagnétique d'une première polarisation, de détecter un deuxième signal représentant le rayonnement électromagnétique d'une deuxième polarisation différente et de déterminer une différence entre les premier et deuxième signaux.

6. Procédé selon l'une des revendications précédentes, dans lequel l'appareil de détection sensible à la polarisation comprend au moins une paire de détecteurs sensibles à la polarisation, et le premier détecteur de la paire a une sensibilité maximale à une polarisation différente de celle du deuxième détecteur de la paire, chaque détecteur étant configuré pour fournir un signal de sortie respectif représentant le rayonnement électromagnétique détecté, et éventuellement :
le procédé comprend en outre, pour la paire ou chaque paire de détecteurs, le fait de déterminer une différence entre les signaux de sortie obtenus en utilisant le premier détecteur et le deuxième détecteur.

7. Procédé selon l'une des revendications 1 à 5, dans lequel le rayonnement électromagnétique appliqué comprend un rayonnement électromagnétique polarisé, et au moins l'un des éléments a) et b) consistant à ce que :
a) l'application du rayonnement électromagnétique sur la nanostructure comprend le fait d'appliquer en séquence un rayonnement électromagnétique de différentes polarisations sur la nanostructure ;
b) le procédé comprend le fait de détecter un rayonnement électromagnétique réfléchi ou transmis par la nanostructure en utilisant un appareil de détection sensible substantiellement à la non-polarisation.

8. Procédé selon l'une des revendications précédentes, dans lequel le marquage comprend une pluralité de nanostructures, chaque nanostructure représente une valeur de données respective en utilisant une propriété de polarisation de la nanostructure, et le procédé comprend le fait de déterminer les valeurs de données à partir du rayonnement électromagnétique polarisé détecté.

9. Procédé selon l'une des revendications précédentes, dans lequel le marquage est un marquage sur l'un(e) au moins d'une micropuce, d'un dispositif à semi-conducteur, d'une carte de circuit imprimé, d'un emballage de médicament, d'un dispositif de mémoire ou d'un support de contenu de musique, image, vidéo ou texte enregistré(e), d'implants médicaux ou d'autres dispositifs médicaux, de pièces d'avion, d'oeuvres d'art, de bijoux ou d'autres ouvrages artisanaux.

10. Procédé selon l'une des revendications précédentes, dans lequel les données représentent au moins l'un(e) d'un code ; d'un numéro de série ; d'un constructeur ; d'une date, d'une heure ou d'un lieu de construction, d'enregistrement ou de modification ; et d'une marque d'authentification.

11. Procédé selon l'une des revendications précédentes, dans lequel l'au moins un marquage comprend au moins un marquage sur un dispositif à échelle de mesure et le procédé comprend le fait de déterminer un emplacement à partir des données déterminées par le rayonnement électromagnétique polarisé détecté.

12. Procédé selon la revendication 11, dans lequel l'au moins un marquage comprend une pluralité de marquages d'échelle formant une première série de marquages d'échelle, et l'échelle de mesure comprend en outre une deuxième série de marquages d'échelle, et le procédé comprend le fait de déterminer un emplacement sur l'échelle de mesure à la fois de la première série de marquages et de la deuxième série de marquages, et éventuellement :
dans lequel la première série de marquages d'échelle et la deuxième série de marquages d'échelle sont superposées et partagent un axe de mesure commun; et / ou
dans lequel la première série de marquages d'échelle comprend des marquages parmi des marquages d'échelle absolu et des marquages d'échelle incrémentiel, et la deuxième série de marquages d'échelle comprend d'autres marquages parmi des marquages d'échelle absolu et des marquages d'échelle incrémentiel, et le procédé comprend le fait de lire la première série de marquages d'échelle et la deuxième série de marquages d'échelle.

13. Appareil pour lire des données représentées par un marquage (4) comprenant au moins une nanostructure périodique (12) telle qu'une Structure de Surface Périodique Induite par Laser (LIPSS), la nanostructure ou chaque nanostructure (12) comprenant une pluralité de lignes substantiellement parallèles, le marquage (4) représentant des données en utilisant une propriété de polarisation de la nanostructure périodique, et l'appareil comprenant :
un appareil de détection (24a, 24b, 54) pour détecter un rayonnement électromagnétique polarisé réfléchi ou transmis par la nanostructure (12) ; et
une ressource de traitement (32) configurée pour déterminer les données représentées par le marquage à partir du rayonnement électromagnétique polarisé détecté, où :
- l'appareil comprend en outre une source (56) de rayonnement électromagnétique (52a, 52b) configurée pour appliquer un rayonnement électromagnétique polarisé sur la nanostructure (12), et/ou l'appareil de détection comprend un appareil de détection sensible à la polarisation (24a, 24b).

14. Objet (2) ayant un marquage (4) comprenant au moins une nanostructure périodique (12), telle qu'une Structure de Surface Périodique Induite par Laser (LIPSS), la nanostructure ou chaque nanostructure comprenant une pluralité de lignes substantiellement parallèles, le marquage représentant des données en utilisant une propriété de polarisation de la nanostructure périodique et pouvant être lu par un appareil selon la revendication 13.

15. Objet (2) selon la revendication 14, étant au moins l'un d'un article à haute valeur et d'un élément nécessitant une traçabilité robuste, comme une micropuce, un dispositif à semi-conducteur, une carte de circuit imprimé, un emballage de médicament, un dispositif de mémoire, un support de contenu (par exemple pour une musique, une image, un vidéo ou un texte enregistré(e)), un implant médical ou autre dispositif médical, une pièce d'avion, une oeuvre d'art, une pièce de bijouterie ou un autre ouvrage artisanal.
